# EUROPÄISCHE PATENTSCHRIFT

(11) **EP 3 959 563 B1**
(45) Veröffentlichungstag und Bekanntmachung des Hinweises auf die Patenterteilung: **16.08.2023**
(21) Anmeldenummer: 20707694.4
(22) Anmeldetag: 10.03.2020
(51) Int. Cl.: G03B 21/00, G03B 21/20

(54) **BODENPROJEKTIONSVORRICHTUNG FÜR EIN KRAFTFAHRZEUG**
FLOOR PROJECTION DEVICE FOR A MOTOR VEHICLE
DISPOSITIF DE PROJECTION AU SOL POUR UN VÉHICULE AUTOMOBILE

(30) Priorität: 24.04.2019 EP 19170802
(43) Veröffentlichungstag der Anmeldung: 02.03.2022
(73) Patentinhaber: ZKW Group GmbH, 3250 Wieselburg (AT)
(72) Erfinder: DANNER, Markus, 2252 Ollersdorf (AT); MAIER, Christian, 3281 Oberndorf an der Melk (AT)
(74) Vertreter: Patentanwaltskanzlei Matschnig & Forsthuber OG
(86) Internationale Anmeldenummer: PCT/EP2020/056319
(87) Internationale Veröffentlichungsnummer: WO 2020/216519

(56) Entgegenhaltungen:
- JP-A- 2016 107 776
- US-A1- 2007 053 195
- US-A1- 2017 210 282

## Beschreibung

Die Erfindung betrifft eine Bodenprojektionsvorrichtung für ein Kraftfahrzeug zur Erzeugung von zumindest einer Bodenprojektion, wobei die Bodenprojektionsvorrichtung ein Leuchtmittel und ein Projektionsmittel, vorzugsweise zumindest eine Projektionslinse, aufweist, wobei das Leuchtmittel dazu eingerichtet ist, Licht zu erzeugen und zumindest teilweise auf das Projektionsmittel abzustrahlen, wobei das Projektionsmittel dazu eingerichtet ist, das Licht, welches von dem Leuchtmittel auf das Projektionsmittel abgestrahlt wird, in einem in das Kraftfahrzeug eingebauten Zustand der Bodenprojektionsvorrichtung, seitlich des Kraftfahrzeugs als Bodenprojektion auf eine Fahrbahn zu projizieren, wobei die Bodenprojektion zumindest zwei voneinander beabstandete Lichtsegmente umfasst, wobei das Leuchtmittel hierzu zumindest zwei einzeln ansteuerbare Lichtquellen aufweist, wobei jedem Lichtsegment eine Lichtquelle zugeordnet ist, wobei das Projektionsmittel einen Brennpunkt oder eine Brennlinie aufweist, wobei zumindest eine der zumindest zwei Lichtquellen relativ zu dem Brennpunkt oder der Brennlinie des Projektionsmittels versetzt angeordnet ist, wobei ein erster Anteil des Lichts, welches von den zumindest zwei Lichtquellen erzeugt wird, entlang einer ersten Strahlrichtung, welche direkt auf das Projektionsmittel gerichtet ist, abgestrahlt wird, wobei ein zweiter Anteil des Lichts, welches von einer der zumindest zwei Lichtquellen erzeugt wird, in einer zweiten Strahlrichtung, welche nicht direkt auf das Projektionsmittel gerichtet ist, abgestrahlt wird.

Die Erfindung betrifft überdies ein Kraftfahrzeug, umfassend eine Bodenprojektionsvorrichtung.

Vorrichtungen zum Abstrahlen von Licht seitlich eines Kraftfahrzeugs sind im Stand der Technik bekannt. Vorrichtungen, welche mehrere Lichtsegmente auf eine Fahrbahn abstrahlen können, haben jedoch den Nachteil, dass die einzelnen Lichtsegmente, wenn sie auf eine Fahrbahn abgestrahlt werden, auf Grund von Streulicht der Lichtquellen einen unzureichenden Kontrast aufweisen können, was eine Verschlechterung der Signalwirkung zur Folge hat. US 2007/053195 offenbart eine Bodenprojektionsvorrichtung für ein Kraftfahrzeug zur Erzeugung von zumindest einer Bodenprojektion wobei die Bodenprojektionsvorrichtung ein Leuchtmittel und ein Projektionsmittel beinhaltet.

Die Aufgabe der vorliegenden Erfindung besteht also darin, die Nachteile des Standes der Technik zu lindern bzw. zu beseitigen. Die Erfindung setzt sich daher insbesondere zum Ziel, eine Bodenprojektionsvorrichtung für ein Kraftfahrzeug zu schaffen, bei welcher die Projektion von Lichtsegmenten auf eine Fahrbahn verbessert wird.

Diese Aufgabe wird durch eine Bodenprojektionsvorrichtung mit den Merkmalen von Anspruch 1 gelöst. Bevorzugte Ausführungen sind in den abhängigen Ansprüchen angegeben.

Erfindungsgemäß weist die Bodenprojektionsvorrichtung Absorptionsmittel und/oder Ablenkungsmittel auf, welche dazu eingerichtet sind, den zweiten Anteil des Lichts, welcher entlang der zweiten Strahlrichtung abgestrahlt wird, zumindest teilweise zu absorbieren und/oder abzulenken, sodass der zweite Anteil des Lichts nicht auf das Projektionsmittel trifft. Der zweite Anteil des Lichts kann im Wesentlichen als Streulicht aufgefasst werden, welches durch den Umstand hervorgerufen werden kann, dass zumindest eine Lichtquelle nicht direkt im Brennpunkt bzw. der Brennlinie des Projektionsmittels angeordnet ist. Falls Streulicht auf das Projektionsmittel trifft, wird der Kontrast der auf die Fahrbahn projizierten Lichtsegmente nachteiligerweise reduziert. Durch die erfindungsgemäßen Absorptionsmittel und/oder Ablenkungsmittel kann das Projektionsmittel im Wesentlichen streulichtfrei bleiben. Vorteilhafterweise kann das Streulicht innerhalb der Bodenprojektionsvorrichtung, genauer gesagt in dem räumlichen Bereich zwischen dem Leuchtmittel und dem Projektionsmittel, nicht bis zu dem Projektionsmittel vordingen, da das Streulicht am Weg von dem Leuchtmittel zu dem Projektionsmittel vorzugsweise im Wesentlichen vollständig absorbiert und/oder abgelenkt wird. Dies erhöht den Kontrast der Lichtsegmente und erhöht somit deren Sichtbarkeit. Dies wiederum erhöht die Verkehrssicherheit. Die zumindest zwei Lichtsegmente der Bodenprojektion werden seitlich des Kraftfahrzeugs auf eine Fahrbahn projiziert, wobei seitlich in diesem Zusammenhang seitlich in Fahrtsichtung des Kraftfahrzeugs zu sehen ist. Mit anderen Worten in Fahrrichtung die linke und/oder rechte Seite des Kraftfahrzeugs. Jene Fahrzeugseiten, an welchen beispielsweise die Außenspiegel des Kraftfahrzeugs angebracht sind.

Die zumindest zwei Lichtsegmente können im Wesentlichen streifenförmig ausgebildet sein. Dabei können beispielsweise die zumindest zwei Lichtsegmente eine gleiche oder eine unterschiedliche Länge aufweisen. Mit anderen Worten kann ein Lichtsegment im auf eine Fahrbahn projizierten Zustand beispielsweise als Lichtstreifen oder als Leuchtstreifen angesehen werden, welcher einen streifenförmigen Bereich einer Fahrbahn erhellt bzw. beleuchtet. Ein Lichtsegment hat insbesondere eine Längsausdehnung und eine Querausdehnung, wobei die Längsausdehnung größer ist als die Querausdehnung, wodurch ein streifenförmiger beleuchteter Bereich auf einer Fahrbahn erzeugt werden kann. Die Längsausdehnung des Lichtsegments verläuft im auf eine Fahrbahn projizierten Zustand bevorzugt parallel zu der Längsachse des Kraftfahrzeugs. Die Querausdehnung des Lichtsegments verläuft im auf eine Fahrbahn projizierten Zustand bevorzugt orthogonal zu der Längsachse des Kraftfahrzeugs.

Vorzugsweise ist der Versatz der zumindest einen der zumindest zwei Lichtquellen im eingebauten Zustand der Bodenprojektionsvorrichtung in eine Vertikalrichtung ausgebildet. Mit anderen Worten kann eine der zumindest zwei Lichtquellen vertikal über oder unter der anderen Lichtquelle angeordnet sein. Die Lichtquellen können direkt aneinander anschließen, oder einen Abstand zu einander aufweisen.

Bevorzugt umfasst das Leuchtmittel eine Vielzahl von Lichtquellen, welche an einer Leiterplatte in vertikal übereinander liegenden Lichtquellen-Reihen angeordnet sind, wobei vorzugsweise die einzelnen Lichtquellen-Reihen jeweils eine unterschiedliche Anzahl an Lichtquellen, welche horizontal nebeneinander angeordnet sind, aufweisen. Somit kann beispielsweise eine erste Lichtquellen-Reihe n Lichtquellen aufweisen und eine zweite Lichtquellen-Reihe, welche vertikal über oder unter der ersten Lichtquellen-Reihe angeordnete ist, beispielsweise n+1 oder n-1 Lichtquellen aufweisen. Für den Fall, dass die zweite Lichtquellen-Reihe n+1 Lichtquellen aufweist, kann die erste Lichtquellen-Reihe n Lichtquellen mit n>0 aufweisen. Für den Fall, dass die zweite Lichtquellen-Reihe n-1 Lichtquellen aufweist, kann die erste Lichtquellen-Reihe n Lichtquellen mit n>1 Lichtquellen aufweisen, wobei n eine natürliche Zahl ist. Die zweite Lichtquellen-Reihe kann auch n+m Lichtquellen aufweisen, wobei m eine natürliche Zahl ist. Als eine Lichtquelle ist insbesondere eine LED vorgesehen.

Es kann vorteilhaft sein, wenn die Anzahl der Lichtquellen-Reihen der Anzahl der auf die Fahrbahn projizierten Lichtsegmente entspricht.

Bevorzugt ist jeder Lichtquellen-Reihe jeweils ein Lichtsegment zugeordnet ist. Insbesondere kann jeder Lichtquellen-Reihe genau ein Lichtsegment zugeordnet werden. Somit wird vorzugsweise das Licht, welches von den Lichtquellen einer ersten Lichtquellen-Reihe erzeugt wird, für ein erstes Lichtsegment bereitgestellt. Ferner wird vorzugsweise das Licht, welches von den Lichtquellen einer zweiten Lichtquellen-Reihe erzeugt wird, für ein zweites Lichtsegment bereitgestellt.

Es können die zumindest zwei Lichtquellen und das Projektionsmittel dergestalt ausgebildet und angeordnet sein, dass zumindest zwei Lichtsegmente überlappungsfrei auf die Fahrbahn projizierbar sind. Somit sind vorzugsweise die zumindest zwei Lichtsegmente voneinander beabstandet. Mit anderen Worten ist zwischen zwei Lichtsegmenten, im auf eine Fahrbahn projizierten Zustand, ein Bereich nicht beleuchtet. Der Abstand zwischen zwei Lichtsegmenten kann beispielsweise einer Breite eines Lichtsegments entsprechen.

Vorzugsweise sind die zumindest zwei Lichtquellen und das Projektionsmittel dergestalt ausgebildet und angeordnet, dass die zumindest zwei Lichtsegmente jeweils in einem unterschiedlichen Abstand relativ zu dem Kraftfahrzeug auf die Fahrbahn projizierbar sind. Es kann beispielsweise ein erstes Lichtsegmente, dessen Licht von den Lichtquellen einer ersten Lichtquellen-Reihe bereitgestellt wird, von dem Projektionsmittel in einem ersten Abstand auf die Fahrbahn projiziert werden, wobei das erste Lichtsegment eine erste Länge und eine erste Breite aufweist. Ferner kann beispielsweise ein zweites Lichtsegmente, dessen Licht von den Lichtquellen einer zweiten Lichtquellen-Reihe bereitgestellt wird, von dem Projektionsmittel in einem zweiten Abstand auf die Fahrbahn projiziert werden, wobei das zweite Lichtsegment eine zweite Länge und eine zweite Breite aufweist. Die ersten und zweiten Abstände, die ersten und zweiten Längen und die ersten und zweiten Breiten können gleich oder unterschiedlich sein. Mit anderen Worten können beispielsweise zumindest zwei Lichtsegmente, welche unterschiedliche Abmessungen relativ zueinander aufweisen bzw. unterschiedlich große Flächen bzw. Bereiche einer Fahrbahn beleuchten, mit dem Projektionsmittel in unterschiedlichen Abständen von dem Kraftfahrzeug auf eine Fahrbahn projiziert werden. Beispielsweise kann ein erstes Lichtsegment, welches relativ zu einem zweiten Lichtsegment kürzer und/oder schmäler ist, im Vergleich zu dem zweiten Lichtsegment in einem kleineren Abstand zu dem Kraftfahrzeug auf eine Fahrbahn projiziert werden. Ein erstes Lichtsegment kann z.B. in einem seitlichen Abstand von 0-1 m von dem Kraftfahrzeug, ein zweites Lichtsegment in einem seitlichen Abstand von 1-2 m von dem Kraftfahrzeug und ein drittes Lichtsegment in einem seitlichen Abstand von 2-3 m von dem Kraftfahrzeug auf die Fahrbahn projiziert werden, wobei sich die einzelnen Lichtsegmente insbesondere nicht überlappen.

Bevorzugt weist die Bodenprojektionsvorrichtung ein die zumindest zwei Lichtquellen und das Projektionsmittel zumindest teilweise umschließendes Gehäuse auf, wobei vorzugsweise zumindest eine Innenfläche des Gehäuses die Absorptionsmittel und/oder Ablenkungsmittel aufweist. Die zumindest eine Innenfläche des Gehäuses, welche die Absorptionsmittel und/oder Ablenkungsmittel aufweisen kann, ist vorzugsweise eine Innenfläche, welche sich zwischen dem Leuchtmittel und der Projektionsvorrichtung erstreckt. Vorteilhafterweise kann somit der zweite Anteil des Lichts, welcher entlang der zweiten Strahlrichtung abgestrahlt wird, absorbiert und/oder abgelenkt werden, sodass der zweite Anteil des Lichts nicht auf das Projektionsmittel trifft. Die Absorptionsmittel können lichtabsorbierende Elemente umfassen, welche beispielsweise an zumindest einer Innenfläche des Gehäuses befestigt sind. Die Ablenkungsmittel können lichtbrechende oder lichtstreuende Elemente an der zumindest einen Innenfläche des Gehäuses umfassen. Ablenkungsmittel können beispielsweise rillen-, zacken- oder pyramidenförmige Strukturen umfassen, welche den zweiten Anteil des Lichts brechen, sodass der zweite Anteil des Lichts nicht auf das Projektionsmittel trifft. Die Ablenkungsmittel können zusätzlich auch aus einem lichtabsorbierenden Material hergestellt werden. Dies entspricht einer Kombination von Ablenkungsmittel und Absorptionsmittel.

Das Gehäuse kann insbesondere einen Randbereich des Projektionsmittels formschlüssig umschließen, wobei vorzugsweise die Absorptionsmittel und/oder die Ablenkungsmittel innerhalb des Gehäuses bis unmittelbar vor dem Projektionsmittel angeordnet sind. Mit anderen Worten erstrecken sich die Absorptionsmittel und/oder Ablenkungsmittel innerhalb des Gehäuses an zumindest einer Innenfläche des Gehäuses bis unmittelbar an die Projektionsvorrichtung. Damit ergibt sich der Vorteil, dass das der zweite Anteil des Lichts, das Streulicht, nicht an dem Projektionsmittel vorbei und damit außerhalb des Gehäuses abgestrahlt wird. Das Streulicht kann somit im Wesentlichen vollständig absorbiert und/oder abgelenkt werden, bzw. kann ausreichend viel Streulicht absorbiert und/oder abgelenkt werden, sodass es zu keiner wesentlichen Verschlechterung des Kontrasts der auf eine Fahrbahn projizierten Lichtsegmente kommen kann.

Vorzugsweise weist die Bodenprojektionsvorrichtung ein Kommunikationsmittel zur Erfassung eines Fahrtrichtungsanzeigesignals auf, und ist dazu eingerichtet, eine Aktivierung der Abstrahlung der Lichtsegmente zeitlich synchron mit der Aktivierung eines Fahrtrichtungsanzeigers des Kraftfahrzeugs zu ermöglichen. Die Projektion der zumindest zwei Lichtsegmente kann im Wesentlich zeitgleich mit dem Lichtsignal des Fahrtrichtungsanzeigers erfolgen. Damit kann vorteilhafterweise ein Abbiegevorgang oder ein Spurwechsel des Kraftfahrzeugs von anderen Verkehrsteilnehmern besser wahrgenommen werden.

Bevorzugt umfasst das Projektionsmittel der Bodenprojektionsvorrichtung genau eine einzige Projektionslinse, insbesondere eine Freiformlinse, wobei der erste Anteil des Lichts sämtlicher die Lichtsegmente erzeugende Lichtquellen auf diese einzige Projektionslinse gelenkt ist. Durch die bevorzugte Verwendung einer einzigen Freiformlinse können das Gewicht und die Kosten der Bodenprojektionsvorrichtung reduziert werden. Die Freiformlinse wird derart geformt, dass das Licht, welches von jeweils einer der zumindest zwei Lichtquellen-Reihen in der ersten Strahlrichtung abgestrahlt wird, in Form eines der entsprechenden Lichtquellen-Reihe zugeordneten Lichtsegments auf eine Fahrbahn projiziert wird.

Erfindungsgemäß ist ein Kraftfahrzeug umfassend eine Bodenprojektionsvorrichtung vorgesehen.

Bevorzugt ist die Bodenprojektionsvorrichtung an zumindest einem Außenspiegel des Kraftfahrzeugs befestigt.

Die Bodenprojektionsvorrichtung kann insbesondere eine Kühlvorrichtung umfassen, welche vorzugsweise mit dem Leuchtmittel in thermischen Kontakt steht und dazu eingerichtet ist, Wärme von dem Leuchtmittel abzuführen. Die Kühlvorrichtung kann beispielsweise innerhalb, außerhalb oder zumindest teilweise außerhalb des Gehäuses angeordnet sein. Ferner kann die Bodenprojektionsvorrichtung eine Befestigungsvorrichtung umfassen, mit welcher die Bodenprojektionsvorrichtung an einem Kraftfahrzeug, beispielsweise einem Außenspiegel des Kraftfahrzeugs, befestigbar ist. Die Befestigungsvorrichtung kann elektronische Komponenten aufweisen, welche dazu eingerichtet sind, die Bodenprojektionsvorrichtung mit Energie zu versorgen, wenn die Bodenprojektionsvorrichtung an einem Kraftfahrzeug befestigt ist.

Im Rahmen dieser Beschreibung sind die Begriffe "oben", "unten", "horizontal", "vertikal" als Angaben der Ausrichtung zu verstehen, wenn die Bodenprojektionsvorrichtung in normaler Benutzungsstellung angeordnet ist, nachdem sie beispielsweise an einem Außenspiegel eines Kraftfahrzeugs eingebaut wurde.

Die Erfindung wird nachstehend anhand eines bevorzugten Ausführungsbeispiels, auf das sie jedoch nicht beschränkt sein soll, noch weiter erläutert. In der Zeichnung zeigen:
Fig. 1 eine Vorderansicht einer erfindungsgemäßen Bodenprojektionsvorrichtung;
Fig. 2 eine Seitenansicht der Bodenprojektionsvorrichtung;
Fig. 3 eine weitere Seitenansicht der Bodenprojektionsvorrichtung;
Fig. 4 eine perspektivische Ansicht von Absorptionsmitteln bzw. Ablenkungsmitteln der Bodenprojektionsvorrichtung;
Fig. 5 eine Draufsicht eines Kraftfahrzeug mit seitlich projizierten Lichtsegmenten; und
Fig. 6 eine perspektivische Ansicht einer Bodenprojektionsvorrichtung mit einem Gehäuse und einer Befestigungsvorrichtung.

Die Figuren zeigen schematische Ansichten, wobei jeweils auf die Darstellung unwesentlicher Komponenten verzichtet wird. Dies soll dem besseren Verständnis dienen.

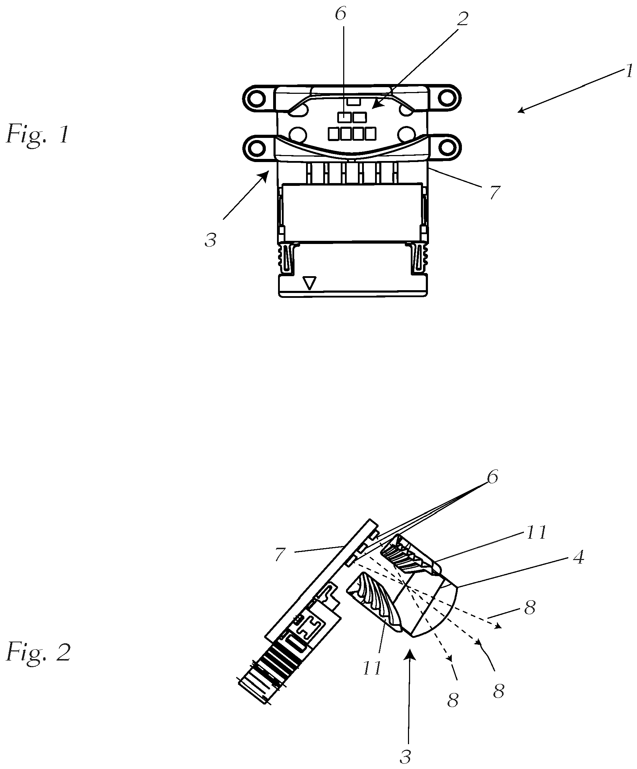

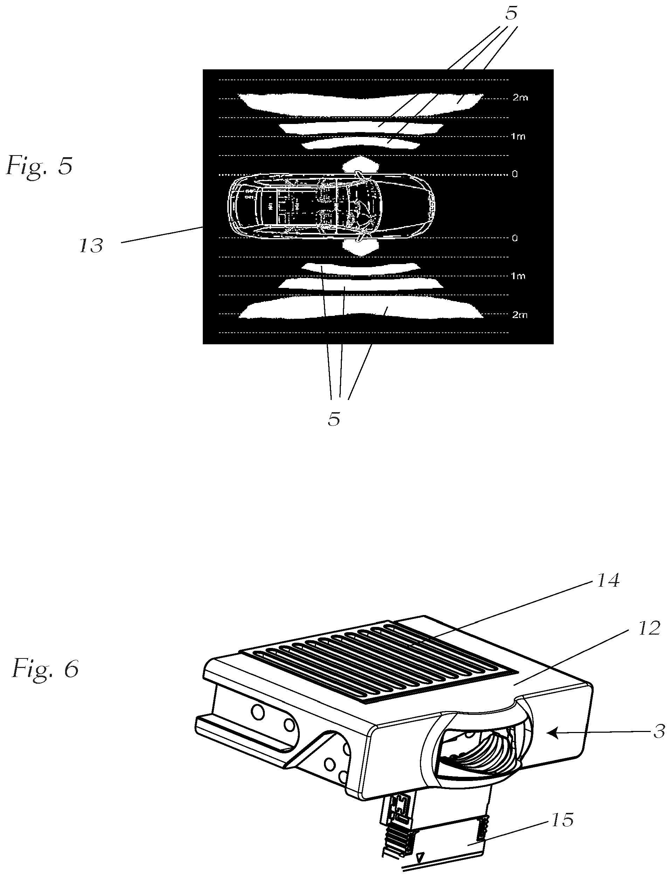

Fig. 1 zeigt eine Bodenprojektionsvorrichtung 1 für ein Kraftfahrzeug zur Erzeugung von zumindest einer Bodenprojektion. Die Bodenprojektionsvorrichtung 1 umfasst ein Leuchtmittel 2 und ein Projektionsmittel 3, vorzugsweise zumindest eine Projektionslinse 4, wobei das Leuchtmittel 2 dazu eingerichtet ist, Licht zu erzeugen und zumindest teilweise auf das Projektionsmittel 3 abzustrahlen. Das Projektionsmittel 3 ist dazu eingerichtet, das Licht, welches von dem Leuchtmittel 2 auf das Projektionsmittel 3 abgestrahlt wird, in einem in das Kraftfahrzeug eingebauten Zustand der Bodenprojektionsvorrichtung 1, seitlich des Kraftfahrzeugs als Bodenprojektion auf eine Fahrbahn zu projizieren (s. Fig. 5). In dem gezeigten Ausführungsbeispiel umfasst das Projektionsmittel 3 genau eine einzige Projektionslinse 4, insbesondere eine Freiformlinse. Die Bodenprojektion umfasst zumindest zwei voneinander beabstandete Lichtsegmente 5. In dem Ausführungsbeispiel gemäß Fig. 5 umfasst die Bodenprojektion jeweils drei Lichtsegmente 5, welche auf der linken und rechten Fahrzeugseite auf eine Fahrbahn projiziert werden. Zum Erzeugen der Bodenprojektion weist das Leuchtmittel 2 zumindest zwei einzeln ansteuerbare Lichtquellen 6 auf, wobei jedem Lichtsegment 5 eine Lichtquelle 6 zugeordnet ist. Das Projektionsmittel 3 hat einen Brennpunkt oder eine Brennlinie, wobei eine der Lichtquellen 6 relativ zu dem Brennpunkt oder der Brennlinie des Projektionsmittels 3 versetzt angeordnet ist. Gemäß dem Ausführungsbeispiel in Fig. 1 umfasst das Leuchtmittel 2 sieben Lichtquellen 6, welche an einer Leiterplatte 7 in vertikal übereinander liegenden Lichtquellen-Reihen angeordnet sind. Eine erste Lichtquellen-Reihe umfasst vier Lichtquellen 6, eine vertikal darüber angeordnete zweite Lichtquellen-Reihe umfasst zwei Lichtquellen 6 und eine vertikal über der zweiten Lichtquellen-Reihe befindliche dritte Lichtquellen-Reihe umfasst eine Lichtquelle 6. Die Anzahl der Lichtquellen-Reihen entspricht der Anzahl der auf einer Fahrzeugseite auf die Fahrbahn projizierten Lichtsegmente 5, wobei jeder Lichtquellen-Reihe jeweils ein Lichtsegment 5 zugeordnet ist. Die Lichtquellen 6 und das Projektionsmittel 3 sind dergestalt ausgebildet und angeordnet, dass die einzelnen Lichtsegmente 5 überlappungsfrei auf die Fahrbahn projiziert werden.

Wie in Fig. 2 ersichtlich, wird ein erster Anteil des Lichts, welches von den Lichtquellen 6 erzeugt wird, entlang einer ersten Strahlrichtung 8, welche direkt auf das Projektionsmittel 3 gerichtet ist, abgestrahlt. Der erste Anteil des Lichts setzt sich zusammen aus dem Licht, welches von den verschiedenen Lichtquellen-Reihen erzeugt wird. Dabei erzeugt jede Lichtquellen-Reihe das Licht für ein bestimmtes Lichtsegment 5.

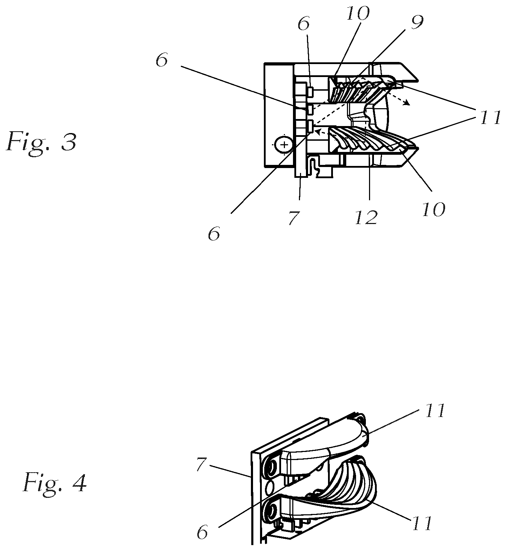

Wie in Fig. 3 ersichtlich, wird ein zweiter Anteil des Lichts, welches von den Lichtquellen 6 erzeugt wird, in einer zweiten Strahlrichtung 9, welche nicht direkt auf das Projektionsmittel gerichtet ist, abgestrahlt. Der zweite Anteil des Lichts, das Streulicht, kommt durch den Umstand zustande, dass manche Lichtquellen 6 bzw. manche Lichtquellen-Reihen außerhalb des Brennpunkts bzw. außerhalb der Brennlinie des Projektionsmittels 3 angeordnet sind. Dieses Streulicht kann dann an Innenflächen 10 der Bodenprojektionsvorrichtung 1 reflektiert werden und dadurch auf das Projektionsmittel 3 treffen. Dies führt zu einer Verschlechterung des Kontrasts der auf die Fahrbahn projizierten Lichtsegmente 5.

Die Bodenprojektionsvorrichtung 1 weist Absorptionsmittel und/oder Ablenkungsmittel 11 auf, welche dazu eingerichtet sind, den zweiten Anteil des Lichts, das Streulicht, welches entlang der zweiten Strahlrichtung 9 abgestrahlt wird, zumindest teilweise zu absorbieren und/oder abzulenken, sodass der zweite Anteil des Lichts nicht auf das Projektionsmittel 3 trifft. Die Fig. 4 zeigt die Absorptionsmittel und/oder Ablenkungsmittel 11 der Bodenprojektionsvorrichtung 1, wobei zur vereinfachten Darstellung zahlreiche Komponenten der Bodenprojektionsvorrichtung 1 nicht gezeigt werden. Die Absorptionsmittel und/oder Ablenkungsmittel 11 weisen eine rillenförmige, im Querschnitt zackenförmige, Struktur auf, wodurch Licht abgelenkt bzw. gebrochen wird, sodass das Licht nicht mehr auf das Projektionsmittel 3 treffen kann. Die Absorptionsmittel und/oder Ablenkungsmittel 11 können ferner aus einem lichtabsorbierenden Material hergestellt werden.

Fig. 5 zeigt die mit der Bodenprojektionsvorrichtung 1 auf eine Fahrbahn projizierten Lichtsegmente 5, welche im Wesentlichen streifenförmig ausgebildet sind. Die Lichtsegmente 5 werden jeweils in einem unterschiedlichen Abstand relativ zu dem Kraftfahrzeug auf die Fahrbahn projiziert.

Wie in Fig. 3 und 6 veranschaulicht, weist die Bodenprojektionsvorrichtung 1 ein die Lichtquellen 6 und das Projektionsmittel 3 zumindest teilweise umschließendes Gehäuse 12 auf, wobei zumindest eine Innenfläche 10 des Gehäuses 12 die Absorptionsmittel und/oder Ablenkungsmittel 11 aufweist. In dem gezeigten Ausführungsbeispiel sind die Absorptions- bzw. Ablenkungsmittel 11 jeweils an einer oberen und einer unteren Innenfläche 10 des Gehäuses 12 befestigt. Das Gehäuse 12 umschließt einen Randbereich des Projektionsmittels 3 formschlüssig, wobei die Absorptionsmittel und/oder die Ablenkungsmittel 11 innerhalb des Gehäuses 12 bis unmittelbar vor dem Projektionsmittel 3 angeordnet sind. In Fig. 6 ist ferner eine Befestigungsvorrichtung 15 gezeigt, mit welcher die Bodenprojektionsvorrichtung 1 an ein Kraftfahrzeug 13, beispielsweise an einen Seitenspiegel des Kraftfahrzeugs 13, befestigt werden kann.

Die Bodenprojektionsvorrichtung 1 umfasst ein (nicht gezeigtes) Kommunikationsmittel zur Erfassung eines Fahrtrichtungsanzeigesignals, und ist ferner dazu eingerichtet, eine Aktivierung der Abstrahlung der Lichtsegmente 5 zeitlich synchron mit der Aktivierung eines Fahrtrichtungsanzeigers des Kraftfahrzeugs zu ermöglichen. Dabei können mehrere Lichtquellen 6 zeitglich mit dem Fahrtrichtungsanzeiger aktiviert werden, wobei mittels der Projektionsvorrichtung 3 entsprechende Lichtsegmente 5 auf die Fahrbahn projiziert werden. Die Lichtquellen 6 können aber auch zu verschiedenen Zeitpunkten, beispielsweise alternierend oder nacheinander aktiviert werden, sodass mittels dem Projektionsmittel 3 Lichtsegmente 5 in Form von unterschiedlichen Lichtsignalen bzw. Leuchtmustern auf die Fahrbahn projiziert werden können.

Wie in Fig. 6 gezeigt umfasst die Bodenprojektionsvorrichtung insbesondere eine Kühlvorrichtung 14, welche vorzugsweise mit dem Leuchtmittel 2 in thermischen Kontakt steht und dazu eingerichtet ist, Wärme von dem Leuchtmittel 2 abzuführen. Die Kühlvorrichtung 14 kann beispielsweise innerhalb, außerhalb oder zumindest teilweise außerhalb des Gehäuses 12 angeordnet sein. Ferner kann die Bodenprojektionsvorrichtung 1 eine Befestigungsvorrichtung 15 umfassen, mit welcher die Bodenprojektionsvorrichtung 1 an einem Kraftfahrzeug, beispielsweise einem Außenspiegel des Kraftfahrzeugs, befestigbar ist. Die Befestigungsvorrichtung 15 kann elektronische Komponenten aufweisen, welche dazu eingerichtet sind, die Bodenprojektionsvorrichtung 1 mit Energie zu versorgen, wenn die Bodenprojektionsvorrichtung 1 an einem Kraftfahrzeug befestigt ist.

## Patentansprüche

1. Bodenprojektionsvorrichtung (1) für ein Kraftfahrzeug zur Erzeugung von zumindest einer Bodenprojektion, wobei die Bodenprojektionsvorrichtung (1) ein Leuchtmittel (2) und ein Projektionsmittel (3), vorzugsweise zumindest eine Projektionslinse (4), aufweist, wobei das Leuchtmittel (2) dazu eingerichtet ist, Licht zu erzeugen und zumindest teilweise auf das Projektionsmittel (3) abzustrahlen, wobei das Projektionsmittel (3) dazu eingerichtet ist, das Licht, welches von dem Leuchtmittel (2) auf das Projektionsmittel (3) abgestrahlt wird, in einem in das Kraftfahrzeug eingebauten Zustand der Bodenprojektionsvorrichtung (1), seitlich des Kraftfahrzeugs als Bodenprojektion auf eine Fahrbahn zu projizieren, wobei die Bodenprojektion zumindest zwei voneinander beabstandete Lichtsegmente (5) umfasst, wobei das Leuchtmittel (2) hierzu zumindest zwei einzeln ansteuerbare Lichtquellen (6) aufweist, wobei jedem Lichtsegment (5) eine Lichtquelle (6) zugeordnet ist, wobei das Projektionsmittel (3) einen Brennpunkt oder eine Brennlinie aufweist, wobei zumindest eine der zwei Lichtquellen (6) relativ zu dem Brennpunkt oder der Brennlinie des Projektionsmittels (3) versetzt angeordnet ist, wobei ein erster Anteil des Lichts, welches von den zumindest zwei Lichtquellen (6) erzeugt wird, entlang einer ersten Strahlrichtung (8), welche direkt auf das Projektionsmittel (3) gerichtet ist, abgestrahlt wird, wobei ein zweiter Anteil des Lichts, welches von einer der zumindest zwei Lichtquellen (6) erzeugt wird, in einer zweiten Strahlrichtung (9), welche nicht direkt auf das Projektionsmittel (3) gerichtet ist, abgestrahlt wird, wobei die Bodenprojektionsvorrichtung (1) Absorptionsmittel und/oder Ablenkungsmittel (11) aufweist, welche dazu eingerichtet sind, den zweiten Anteil des Lichts, welcher entlang der zweiten Strahlrichtung (9) abgestrahlt wird, zumindest teilweise zu absorbieren und/oder abzulenken, sodass der zweite Anteil des Lichts nicht auf das Projektionsmittel (3) trifft.

2. Bodenprojektionsvorrichtung (1) nach Anspruch 1, wobei die zumindest zwei Lichtsegmente (5) im Wesentlichen streifenförmig ausgebildet sind.

3. Bodenprojektionsvorrichtung (1) nach Anspruch 1 oder 2, wobei der Versatz der einen der zumindest zwei Lichtquellen (6) im eingebauten Zustand der Bodenprojektionsvorrichtung (1) in eine Vertikalrichtung ausgebildet ist.

4. Bodenprojektionsvorrichtung (1) nach einem der vorhergehenden Ansprüche, wobei das Leuchtmittel (2) eine Vielzahl von Lichtquellen (6) umfasst, welche an einer Leiterplatte (7) in vertikal übereinander liegenden Lichtquellen-Reihen angeordnet sind, wobei vorzugsweise die einzelnen Lichtquellen-Reihen jeweils eine unterschiedliche Anzahl an Lichtquellen (6), welche horizontal nebeneinander angeordnet sind, aufweisen.

5. Bodenprojektionsvorrichtung (1) nach Anspruch 4, wobei die Anzahl der Lichtquellen-Reihen der Anzahl der auf die Fahrbahn projizierten Lichtsegmente (5) entspricht.

6. Bodenprojektionsvorrichtung (1) nach Anspruch 5, wobei jeder Lichtquellen-Reihe jeweils ein Lichtsegment (5) zugeordnet ist.

7. Bodenprojektionsvorrichtung (1) nach einem der vorhergehenden Ansprüche, wobei die zumindest zwei Lichtquellen (6) und das Projektionsmittel (3) dergestalt ausgebildet und angeordnet sind, dass zumindest zwei Lichtsegmente (5) überlappungsfrei auf die Fahrbahn projizierbar sind.

8. Bodenprojektionsvorrichtung (1) nach einem der vorhergehenden Ansprüche, wobei die zumindest zwei Lichtquellen (6) und das Projektionsmittel (3) dergestalt ausgebildet und angeordnet sind, dass die zumindest zwei Lichtsegmente (5) jeweils in einem unterschiedlichen Abstand relativ zu dem Kraftfahrzeug auf die Fahrbahn projizierbar sind.

9. Bodenprojektionsvorrichtung (1) nach einem der vorhergehenden Ansprüche, wobei die Bodenprojektionsvorrichtung (1) ein die zumindest zwei Lichtquellen (6) und das Projektionsmittel (3) zumindest teilweise umschließendes Gehäuse (12) aufweist, wobei zumindest eine Innenfläche (10) des Gehäuses (12) die Absorptionsmittel und/oder Ablenkungsmittel (11) aufweist.

10. Bodenprojektionsvorrichtung (1) nach Anspruch 9, wobei das Gehäuse (12) einen Randbereich des Projektionsmittels (3) formschlüssig umschließt, wobei die Absorptionsmittel und/oder die Ablenkungsmittel (11) innerhalb des Gehäuses (12) bis unmittelbar vor dem Projektionsmittel (3) angeordnet sind.

11. Bodenprojektionsvorrichtung (1) nach einem der vorhergehenden Ansprüche, wobei die Bodenprojektionsvorrichtung (1) ein Kommunikationsmittel zur Erfassung eines Fahrtrichtungsanzeigesignals aufweist, und dazu eingerichtet ist, eine Aktivierung der Abstrahlung der Lichtsegmente (5) zeitlich synchron mit der Aktivierung eines Fahrtrichtungsanzeigers des Kraftfahrzeugs zu ermöglichen.

12. Bodenprojektionsvorrichtung (1) nach einem der vorhergehenden Ansprüche, wobei das Projektionsmittel (3) der Bodenprojektionsvorrichtung (1) genau eine einzige Projektionslinse (4), insbesondere eine Freiformlinse, umfasst, wobei der erste Anteil des Lichts sämtlicher die Lichtsegmente (5) erzeugende Lichtquellen auf diese einzige Projektionslinse (4) gelenkt ist.

13. Kraftfahrzeug, umfassend eine Bodenprojektionsvorrichtung (1) nach einem der vorhergehenden Ansprüche.

14. Kraftfahrzeug nach Anspruch 13, wobei die Bodenprojektionsvorrichtung (1) an zumindest einem Außenspiegel des Kraftfahrzeugs befestigt ist.

## Claims

1. Ground projection device (1) for a motor vehicle for generating at least one ground projection, the ground projection device (1) having a luminous means (2) and a projection means (3), preferably at least one projection lens (4), the luminous means (2) being set up to generate light and to emit it at least partially onto the projection means (3), the projection means (3) being set up to emit the light, which is emitted by the luminous means (2) onto the projection means (3), in a state of the ground projection device (1) installed in the motor vehicle, laterally of the motor vehicle as a ground projection, which is emitted by the lighting means (2) onto the projection means (3), in a state of the ground projection device (1) installed in the motor vehicle, to the side of the motor vehicle as a ground projection onto a roadway, the ground projection comprising at least two light segments (5) spaced apart from one another, the lighting means (2) having at least two individually controllable light sources (6) for this purpose, each light segment (5) being assigned a light source (6), wherein the projection means (3) has a focal point or a focal line, wherein at least one of the two light sources (6) is arranged offset relative to the focal point or the focal line of the projection means (3), wherein a first portion of the light, which is generated by the at least two light sources (6), is emitted along a first beam direction (8), which is directed directly onto the projection means (3), wherein a second portion of the light, which is generated by one of the at least two light sources (6), is emitted along a second beam direction (9), which is directed directly onto the projection means (3), is emitted in a second beam direction (9) which is not directly directed onto the projection means (3), wherein the ground projection device (1) comprises absorption means and/or deflection means (11) which are arranged to at least partially absorb and/or deflect the second portion of the light which is emitted along the second beam direction (9), so that the second portion of the light does not strike the projection means (3).

2. Ground projection device (1) according to claim 1, wherein the at least two light segments (5) are substantially strip-shaped.

3. Ground projection device (1) according to claim 1 or 2, wherein the offset of the one of the at least two light sources (6) in the installed state of the ground projection device (1) is formed in a vertical direction.

4. Ground projection device (1) according to one of the preceding claims, wherein the illuminant (2) comprises a plurality of light sources (6) which are arranged on a printed circuit board (7) in light source rows lying vertically one above the other, wherein preferably the individual light source rows each have a different number of light sources (6) which are arranged horizontally next to one another.

5. Ground projection device (1) according to claim 4, wherein the number of light source rows corresponds to the number of light segments (5) projected onto the roadway.

6. Ground projection device (1) according to claim 5, wherein each light source row is assigned one light segment (5) in each case.

7. Ground projection device (1) according to one of the preceding claims, wherein the at least two light sources (6) and the projection means (3) are designed and arranged in such a way that at least two light segments (5) can be projected onto the roadway without overlapping.

8. Ground projection device (1) according to one of the preceding claims, wherein the at least two light sources (6) and the projection means (3) are designed and arranged in such a way that the at least two light segments (5) can each be projected onto the roadway at a different distance relative to the motor vehicle.

9. Ground projection device (1) according to one of the preceding claims, wherein the ground projection device (1) has a housing (12) at least partially enclosing the at least two light sources (6) and the projection means (3), wherein at least one inner surface (10) of the housing (12) has the absorption means and/or deflection means (11).

10. Ground projection device (1) according to claim 9, wherein the housing (12) positively encloses an edge region of the projection means (3), wherein the absorption means and/or the deflection means (11) are arranged inside the housing (12) until directly in front of the projection means (3).

11. Ground projection device (1) according to one of the preceding claims, wherein the ground projection device (1) has a communication means for detecting a direction indicator signal, and is set up to enable activation of the radiation of the light segments (5) in time synchronization with the activation of a direction indicator of the motor vehicle.

12. Ground projection device (1) according to one of the preceding claims, wherein the projection means (3) of the ground projection device (1) comprises precisely a single projection lens (4), in particular a free-form lens, wherein the first portion of the light of all light sources generating the light segments (5) is directed onto this single projection lens (4).

13. Motor vehicle comprising a ground projection device (1) according to any one of the preceding claims.

14. Motor vehicle according to claim 13, wherein the ground projection device (1) is attached to at least one exterior mirror of the motor vehicle.

## Revendications

1. Dispositif de projection au sol (1) pour un véhicule automobile pour générer au moins une projection au sol, le dispositif de projection au sol (1) présentant un moyen d'éclairage (2) et un moyen de projection (3), de préférence au moins une lentille de projection (4), le moyen d'éclairage (2) étant conçu pour générer de la lumière et l'émettre au moins partiellement sur le moyen de projection (3), le moyen de projection (3) étant conçu pour projeter la lumière sur le véhicule automobile à l'arrière du véhicule automobile, qui est émise par le moyen d'éclairage (2) sur le moyen de projection (3), dans un état du dispositif de projection au sol (1) monté dans le véhicule automobile, sur le côté du véhicule automobile comme projection au sol sur une voie de circulation, la projection au sol comprenant au moins deux segments lumineux (5) espacés l'un de l'autre, le moyen d'éclairage (2) présentant à cet effet au moins deux sources lumineuses (6) pouvant être commandées individuellement, une source lumineuse (6) étant associée à chaque segment lumineux (5), le moyen de projection (3) présentant un foyer ou une ligne focale, au moins l'une des deux sources lumineuses (6) étant disposée de manière décalée par rapport au foyer ou à la ligne focale du moyen de projection (3), une première partie de la lumière qui est produite par les au moins deux sources lumineuses (6) étant émise le long d'une première direction de faisceau (8) qui est dirigée directement sur le moyen de projection (3), une deuxième partie de la lumière qui est produite par l'une des au moins deux sources lumineuses (6) étant émise, est émise dans une deuxième direction de faisceau (9) qui n'est pas directement dirigée vers le moyen de projection (3), le dispositif de projection au sol (1) comprenant des moyens d'absorption et/ou des moyens de déviation (11) qui sont adaptés pour absorber et/ou dévier au moins partiellement la deuxième partie de la lumière qui est émise le long de la deuxième direction de faisceau (9), de sorte que la deuxième partie de la lumière ne frappe pas le moyen de projection (3).

2. Dispositif de projection au sol (1) selon la revendication 1, dans lequel les au moins deux segments lumineux (5) sont essentiellement en forme de bande.

3. Dispositif de projection au sol (1) selon la revendication 1 ou 2, dans lequel le décalage de l'une des au moins deux sources lumineuses (6) est réalisé dans une direction verticale lorsque le dispositif de projection au sol (1) est monté.

4. Dispositif de projection au sol (1) selon l'une des revendications précédentes, dans lequel le moyen d'éclairage (2) comprend une pluralité de sources lumineuses (6) qui sont disposées sur une carte de circuit imprimé (7) en rangées de sources lumineuses superposées verticalement, de préférence les différentes rangées de sources lumineuses présentant chacune un nombre différent de sources lumineuses (6) qui sont disposées horizontalement les unes à côté des autres.

5. Dispositif de projection au sol (1) selon la revendication 4, dans lequel le nombre de rangées de sources lumineuses correspond au nombre de segments lumineux (5) projetés sur la chaussée.

6. Dispositif de projection au sol (1) selon la revendication 5, dans lequel un segment lumineux (5) est associé à chaque rangée de sources lumineuses.

7. Dispositif de projection au sol (1) selon l'une des revendications précédentes, dans lequel les au moins deux sources lumineuses (6) et le moyen de projection (3) sont conçus et disposés de telle sorte qu'au moins deux segments lumineux (5) peuvent être projetés sur la chaussée sans se chevaucher.

8. Dispositif de projection au sol (1) selon l'une des revendications précédentes, dans lequel les au moins deux sources lumineuses (6) et le moyen de projection (3) sont conçus et disposés de telle sorte que les au moins deux segments lumineux (5) peuvent être projetés sur la chaussée à une distance différente par rapport au véhicule.

9. Dispositif de projection au sol (1) selon l'une des revendications précédentes, dans lequel le dispositif de projection au sol (1) comporte un boîtier (12) entourant au moins partiellement les au moins deux sources lumineuses (6) et le moyen de projection (3), au moins une surface intérieure (10) du boîtier (12) comportant les moyens d'absorption et/ou les moyens de déviation (11).

10. Dispositif de projection au sol (1) selon la revendication 9, dans lequel le boîtier (12) entoure par complémentarité de forme une zone de bordure du moyen de projection (3), les moyens d'absorption et/ou les moyens de déviation (11) étant disposés à l'intérieur du boîtier (12) jusqu'à être directement devant le moyen de projection (3).

11. Dispositif de projection au sol (1) selon l'une des revendications précédentes, dans lequel le dispositif de projection au sol (1) comporte un moyen de communication pour détecter un signal d'indicateur de direction, et est agencé pour permettre une activation du rayonnement des segments lumineux (5) en synchronisme temporel avec l'activation d'un indicateur de direction du véhicule automobile.

12. Dispositif de projection au sol (1) selon l'une des revendications précédentes, dans lequel le moyen de projection (3) du dispositif de projection au sol (1) comprend exactement une seule lentille de projection (4), notamment une lentille de forme libre, la première partie de la lumière de toutes les sources lumineuses générant les segments lumineux (5) étant dirigée vers cette seule lentille de projection (4).

13. Véhicule automobile comprenant un dispositif de projection au sol (1) selon l'une quelconque des revendications précédentes.

14. Véhicule automobile selon la revendication 13, dans lequel le dispositif de projection au sol (1) est fixé sur au moins un rétroviseur extérieur du véhicule automobile.
